# FASCICULE DE BREVET EUROPEEN

(11) **EP 1 365 492 B1**
(45) Date de publication et mention de la délivrance du brevet: **19.08.2009**
(21) Numéro de dépôt: 03076345.2
(22) Date de dépôt: 07.05.2003
(51) Int. Cl.: H02G 3/08

(54) **Boîtier à encastrer pour des éléments électriques**
Einbaugehäuse für elektrische Bauteile
Built-in housing for electrical equipment

(30) Priorité: 24.05.2002 BE 200200340
(43) Date de publication de la demande: 26.11.2003
(73) Titulaire: JVK Plastics, naamloze vennootschap, 2880 Bornem (BE)
(72) Inventeur: Verlinde, Willy, 8560 Gullegem (BE)
(74) Mandataire: Donné, Eddy

(56) Documents cités:
- BE-A- 1 011 616
- FR-A- 2 781 616
- US-A- 4 428 492

## Description

La présente invention concerne un boîtier à encastrer pour des éléments électriques du type qui comprend une paroi dorsale et une série de parois latérales, par lequel au moins une des parois latérales ou une partie de cette dernière est réalisée sous la forme d'un élément séparé qui peut venir se fixer aux autres éléments constitutifs du boîtier à encastrer.

Dans les boîtiers à encastrer de cette espèce, les parois latérales qui forment un élément séparé, sont fixées aux autres éléments constitutifs à l'aide de moyens d'accouplements qui sont constitués par une liaison du type à tenon et mortaise, le tenon pouvant être réalisé sous la forme d'une languette, liaison par laquelle, lors du montage, les tenons viennent s'insérer la plupart du temps dans les mortaises en étant soumis à un léger pincement.

Avec des moyens d'accouplement de ce type, on court le risque que les parois latérales amovibles se détachent sans le vouloir. Quand un tel détachement a eu lieu une fois, il arrive que les tenons ne serrent plus suffisamment dans les mortaises lorsqu'on fixe la paroi latérale amovible une deuxième fois aux autres éléments.

Le document FR-A-2 781 616 décrit un boîtier à encastrer pour des éléments électriques, du type qui comprend une paroi dorsale et une série de parois latérales. Ce boîtier comprend des moyens de liaison comportant une patte et un cran d'encliquetage, qui s'opposent à la séparation de la paroi latérale précitée.

Le document US-A-4 428 492 décrit un boîtier à encastrer. Ce boîtier peut être assemblé en différentes dimensions à partir d'une série de parois. Le couplage entre les différentes parois se fait par un couplage des parties males et femelles.

Dans certains cas, des tuyaux flexibles sont raccordés au boîtier à encastrer. Il est connu de munir les entrées ou les sorties du boîtier à encastrer, partant également les entrées ou les sorties pratiquées dans une paroi latérale amovible du boîtier à encastrer, de verrouillages pour des tuyaux flexibles de ce type.

Principalement dans des cas de ce type, il peut arriver que, par exemple en exerçant une traction sur un tuyau flexible verrouillé, la paroi amovible à laquelle ce tuyau est verrouillé, se détache de manière non désirée des autres parties du boîtier à encastrer.

L'invention a pour objet de supprimer cet inconvénient et de créer un boîtier à encastrer pour des éléments électriques, par lequel on diminue fortement, voire on supprime complètement le risque d'un détachement involontaire d'une paroi amovible ou d'une partie amovible de cette dernière.

Cet objet est atteint selon l'invention par un boîtier à encastrer pour des éléments électriques, du type qui comprend une paroi dorsale (2) et une série de parois latérales (3 - 4 - 5 - 6), par lequel au moins une des parois latérales (3,5) ou une partie de cette dernière est réalisée sous la forme d'un élément séparé qui peut venir se fixer aux autres éléments constitutifs du boîtier à encastrer (1) et qui comprend des moyens de verrouillage (19) qui s'opposent à la séparation de la paroi latérale précitée (3,5) ou de la partie précitée de cette dernière qui sont réalisées sous la forme d'éléments séparés, et sur lesquelles sont appliqués les éléments de verrouillage précités (19), sont munies d'entrées et/ou de sorties (7 ,8 , 9 ,10) pour des tubes, contre lesquelles sont également appliqués des embranchements (12), les entrées et/ou les sorties précitées (7 ,8 ,9 ,10) et plus spécifiquement les embranchements (12) étant munis de moyens de verrouillage (24) pour des tuyaux flexibles (25) caractérisé en ce que les moyens de verrouillage (19) pour les parois latérales précitées (3,5) sont munis d'un verrouillage plus résistant que les moyens de verrouillage (24) pour les tuyaux flexibles (25).

De préférence, les moyens de verrouillage sont réalisés de telle sorte que la paroi latérale, qui est fixée à l'aide de ces moyens de verrouillage, reste toujours amovible de préférence en exerçant une force manuelle.

Néanmoins, ce que l'on vient d'indiquer n'est pas nécessaire. En tout cas, les moyens de verrouillage peuvent également être de type permanent de telle sorte que la paroi latérale, après l'accouplement, ne peut être retirée à titre exclusif qu'en rompant les moyens de verrouillage. De la même manière, ces moyens de verrouillage peuvent être réalisés de telle sorte que la paroi latérale en question ne peut être détachée qu'en utilisant des ustensiles, tels qu'un tournevis ou analogues. Il est clair que l'on peut opter pour la rupture, aisée ou non, du verrouillage, en fonction de l'objet visé.

Les moyens de verrouillage peuvent être réalisés sous la forme d'un système d'encliquetage ce qui permet d'appliquer les parois latérales d'une manière simple à leur destination.

Ils peuvent comprendre un ou plusieurs éléments en forme de crochets qui viennent s'appliquer, à l'état verrouillé, derrière un bord, chaque élément en forme de crochet pouvant être réalisé sous la forme d'un bourrelet qui vient s'appliquer sur des éléments adaptés l'un à l'autre, de telle sorte que, lors du montage par déformation du bourrelet et/ou des parties avec lesquelles ce bourrelet coopère, on obtient un engrènement par crochets.

D'autres caractéristiques préférées se dégageront de la description ci-après, ainsi que des revendications annexées.

Dans le but de mieux indiquer les caractéristiques de l'invention, on décrit ci-après, à titre d'exemple et sans aucun caractère limitatif, une forme de réalisation préférée d'un boîtier à encastrer pour des éléments électriques selon l'invention, tout en se référant aux dessins annexés dans lesquels :
la figure 1 représente une vue en perspective d'un boîtier à encastrer selon l'invention ;
la figure 2 représente une vue en perspective analogue à celle de la figure 1, mais dans laquelle on représente les pièces détachées du boîtier à encastrer à l'état séparé ;
la figure 3 représente, à une plus grande échelle, la partie qui est indiquée en figure 2 par F3 ;
la figure 4 représente, à une plus grande échelle, une vue en coupe prise le long de la ligne IV - IV en figure 1 ;
les figures 5 et 6 représentent des vues en coupe analogues à celle de la figure 4, mais respectivement avant et pendant le verrouillage ;
la figure 7 représente à une plus grande échelle une vue en coupe prise le long de la ligne VII - VII en figure 1 ;
les figures 8 et 9 représentent des vues en coupe analogues à celle de la figure 7, mais respectivement avant et pendant le verrouillage ;
la figure 10 représente une vue en coupe prise le long de la ligne X - X en figure 1, dans laquelle un tuyau flexible est raccordé au boîtier.

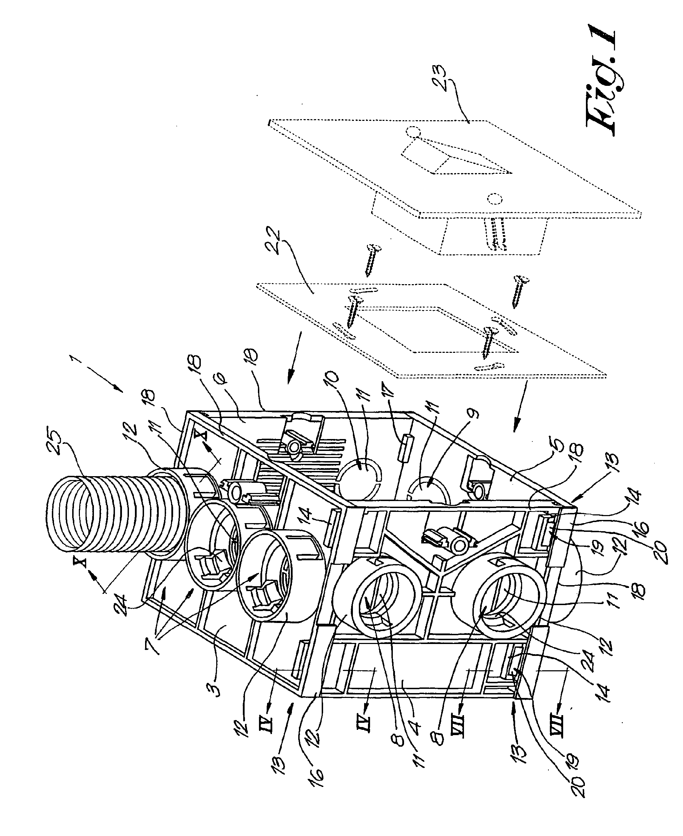

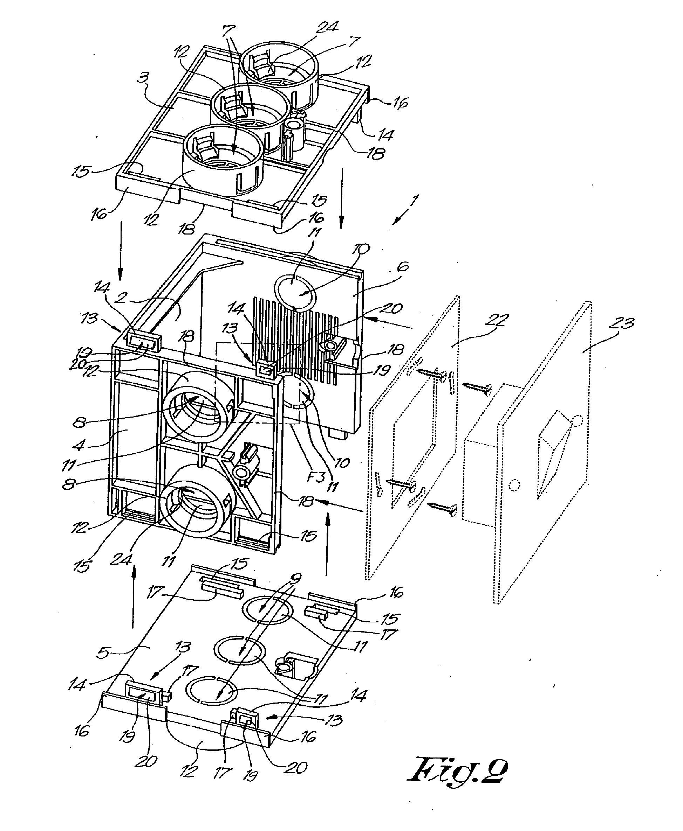

Comme représenté dans les figures 1 et 2, l'invention concerne un boîtier à encastrer 1 pour des éléments électriques. Ce boîtier à encastrer est constitué d'un logement en forme de boîte, réalisé à partir d'une matière synthétique et qui est formé par une paroi dorsale 2 et, dans le cas présent, par quatre parois latérales 3 - 4 - 5 - 6.

Dans le logement, on prévoit plusieurs entrées et/ou sorties 7 - 8 - - 9 - - 10 qui, comme représenté, sont le cas échéant fermées à l'aide de parties de parois 11 qui peuvent être rompues. Les parties de parois 11 qui peuvent être rompues, prévues dans les parois latérales 3 - 4 - 5 - 6 sont entourées, du côté externe, comme représenté et comme c'est habituellement le cas, par un embranchement 12.

Deux parois latérales 3 et 5 opposées l'une à l'autre sont réalisées sous la forme d'éléments séparés qui sont fixés de manière amovible aux autres éléments constitutifs du boîtier à encastrer 1, et notamment les parois latérales 4 et 6 fixées à demeure à la paroi dorsale 2 sont fixées à l'aide de moyens d'accouplement 13.

Ces moyens d'accouplement sont constitués par des liaisons du type à tenon et mortaise ; dans le cas présent, les tenons 14 forment des lèvres et les mortaises 15 présentent une forme oblongue et sont par conséquent réalisées sous la forme de fentes.

Pour rendre impossible un montage incorrect des parois latérales 3 et 5, chacune de ces parois latérales possède aussi bien des tenons 14 que des mortaises 15.

C'est ainsi que l'on trouve, sur le côté interne de la paroi latérale 3, le long d'un bord latéral, deux tenons 14, le tenon 14 le plus proche de la paroi dorsale 2 étant légèrement plus large que l'autre, tandis que deux mortaises 15 sont appliquées sur toute la paroi latérale 3, le long de l'autre bord latéral, la mortaise 15 la plus proche de la paroi dorsale 2 étant légèrement plus longue que l'autre.

De manière analogue, la paroi latérale 5 est munie de tenons 14 et de mortaises 15, mais les tenons 14 et les mortaises 15 sont exactement inversés.

Le long de chaque tenon 14 ou de chaque mortaise 15, sur le côté interne de parois latérales 3 et 5, on trouve, à la périphérie, un bord 16 et de l'autre côté, une nervure de guidage 17.

Les parois latérales 4 et 6 sont, au même titre que les parois latérales 3 et 5, munies, sur leur périphérie, d'un bord 18 orienté vers l'extérieur.

La paroi latérale 4 possède, sur la partie 18A de son bord 18 orienté vers l'extérieur qui est tourné vers la paroi dorsale 2 et qui est disposé sur l'arête de la paroi latérale 3, deux tenons 14, tandis que sur la partie opposée 18B de son bord 18, partant sur l'arête de la paroi latérale 5, sont appliquées deux mortaises 15.

La paroi latérale 6 possède, de manière analogue, sur la partie 18A de son bord 18 orienté vers l'extérieur qui est tourné vers la paroi dorsale 2 et qui est disposé sur l'arête de la paroi latérale 3, deux mortaises 15, tandis que sur la partie opposée 18B de son bord 18, partant sur l'arête de la paroi latérale 5, sont appliqués deux tenons 14.

Lorsque les parois latérales 3 et 5 sont appliquées dans le boîtier à encastrer 1, comme représenté en figure 1, les tenons 14 sur la paroi latérale 4 pénètrent dans les mortaises 15 pratiquées dans la paroi latérale 3, tandis que les tenons 14 sur la paroi latérale 5 pénètrent dans les mortaises 15 pratiquées dans la paroi latérale 4. Les tenons 14 sur la paroi latérale 6 pénètrent à travers les mortaises 15, tandis que les tenons 14 sur la paroi latérale 3 pénètrent dans les mortaises 15 pratiquées dans la paroi latérale 6.

Les tenons 14 sont combinés avec des moyens de verrouillage 19 qui s'opposent au détachement de la paroi latérale 3 ou 5, tout en permettant un détachement de cette dernière lorsqu'on exerce une force suffisamment intense, de préférence manuelle.

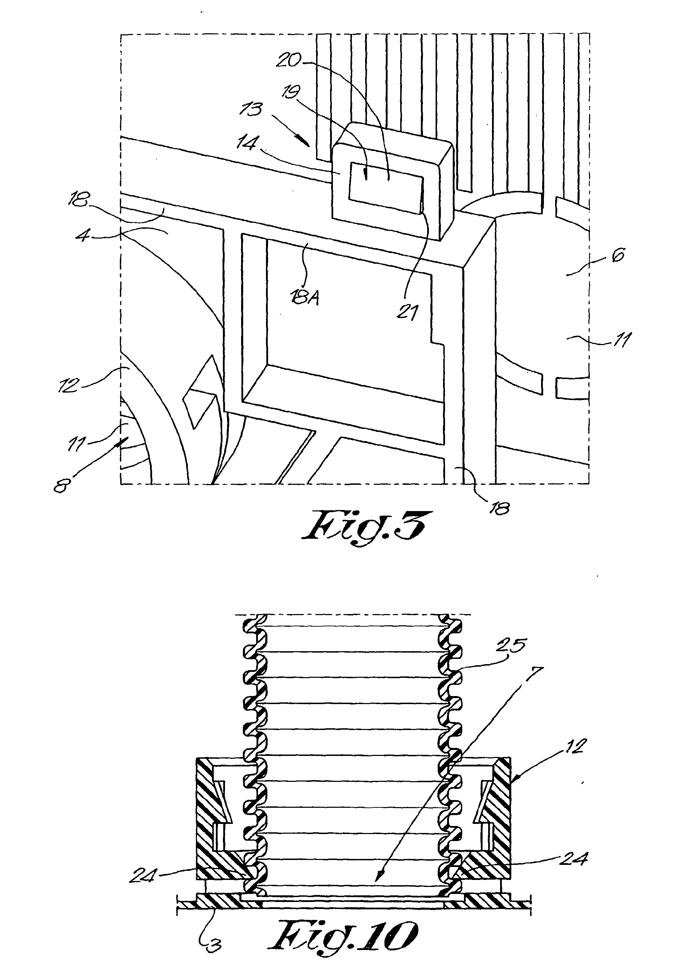

Dans l'exemple représenté, ce moyen de verrouillage 19 est un système d'encliquetage et comprend, comme indiqué en détail dans les figures 3 à 9, un élément en forme de crochets qui est disposé de telle sorte que, lorsque le tenon 14 pénètre dans une mortaise 15, il vient s'appliquer derrière le bord de la partie de paroi autour de la mortaise 15.

Cet élément en forme de crochet forme un bourrelet à partir du tenon 14 et est par conséquent réalisé en une seule pièce avec ce tenon. Ce bourrelet est disposé, au moins dans l'exemple représenté, du côté du tenon 14 tourné vers la périphérie de la paroi latérale correspondante 3, 4, 5 ou 6 et son épaisseur augmente progressivement à partir du côté du sommet du tenon 14 pour ensuite diminuer brusquement.

Les moyens de verrouillage 19 présentent par conséquent en direction de l'arête 18, à l'extérieur, une surface de guidage 20 possédant une légère inclinaison et ensuite une surface de verrouillage 21 possédant une forte inclinaison qui peut même s'élever jusqu'à 90 degrés comme c'est le cas dans l'exemple représenté, mais qui peut le cas échéant être inférieur à 90 degrés pour faire en sorte que la force requise pour retirer la paroi latérale ne soit pas trop intense.

Il convient d'indiquer le fait que le bourrelet peut également prendre d'autres formes, par exemple des formes arrondies ou analogues.

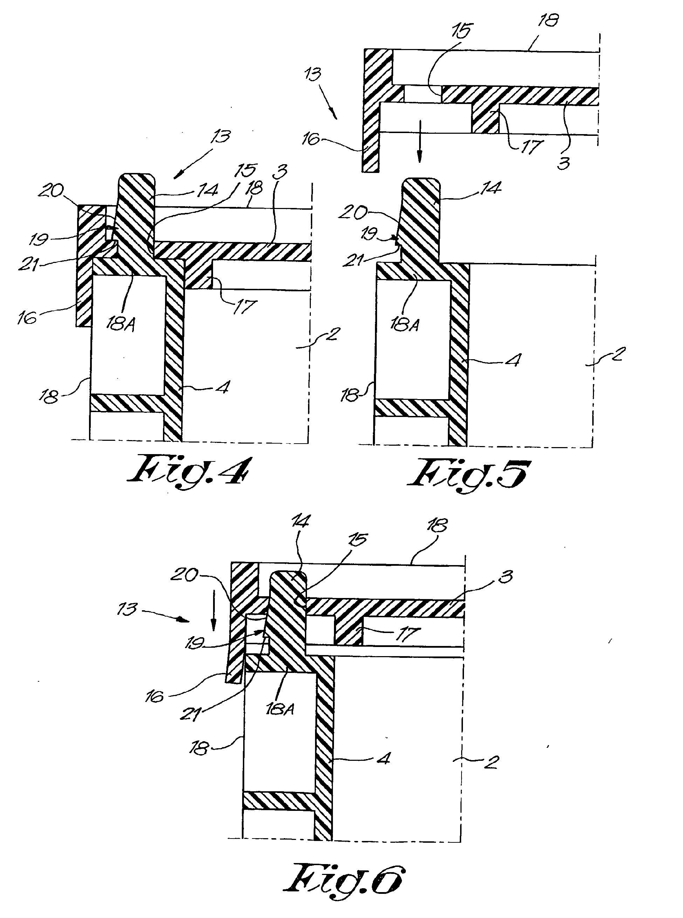

Dans les figures 4, 5 et 6, on représente la façon dont un tenon 14 muni d'un moyen de verrouillage 19 pénètre dans une mortaise 15 de la paroi latérale 4 ; à titre d'exemple, on représente un tenon 14 de la paroi latérale 3 et une mortaise 15 de la paroi latérale 4.

En figure 5, on représente l'état en vigueur avant l'insertion du tenon 14.

La figure 6 représente l'état en vigueur au cours de la pénétration du tenon 14 dans la mortaise 15. Lors de la pénétration, la paroi latérale 3 est guidée par la nervure de guidage 17 et le moyen de verrouillage 19, ainsi que la mortaise 15 sont soumis à une déformation élastique passagère. La surface de guidage 20 légèrement inclinée facilite la pénétration du tenon 14 et du moyen de verrouillage 19 dans la mortaise 15.

En figure 4, on représente l'état en vigueur après l'accouplement et le verrouillage. La surface de guidage 20 et la surface de verrouillage 21 ont complètement traversé la mortaise 15. La partie d'arête 18A de la paroi latérale 4 se trouve contre le bord autour de la mortaise 15 d'un côté de la paroi latérale 3, tandis que la surface de verrouillage 21 se trouve contre le bord autour de la mortaise 15 de l'autre côté de la paroi latérale 3, de telle sorte que le moyen de verrouillage 19 vient s'appliquer à la manière d'un crochet derrière la paroi latérale 3.

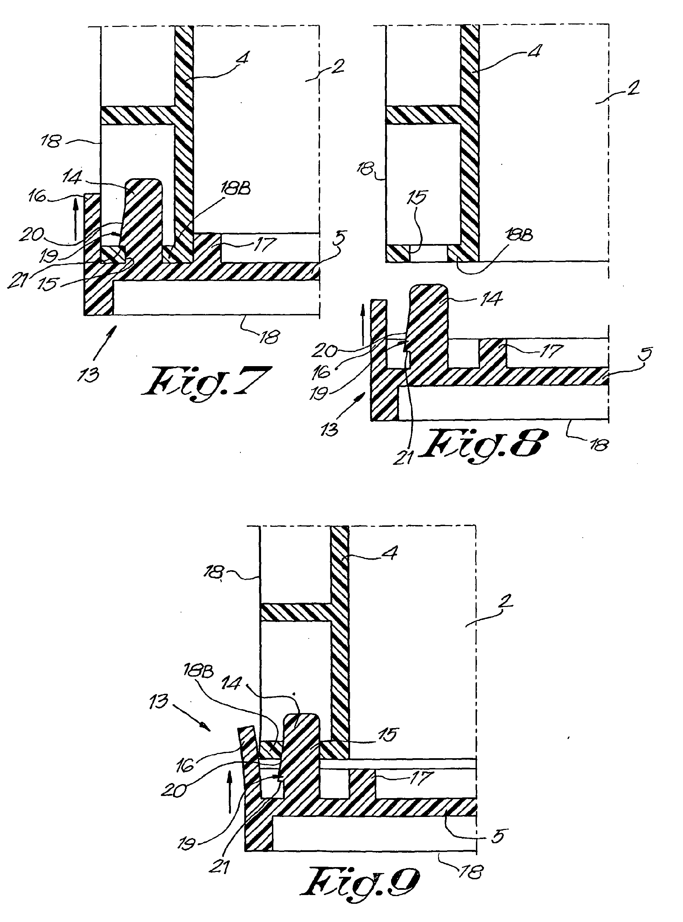

Dans les figures 7, 8 et 9, on représente la façon dont on applique une mortaise 15 d'une paroi amovible par-dessus un tenon 14 pour l'accouplement et le verrouillage ; à titre d'exemple, on représente une mortaise 15 de la paroi latérale amovible 5 et un tenon 14 muni d'un moyen de verrouillage 19 de la paroi latérale 4.

En figure 8, on représente l'état en vigueur avant la pénétration du tenon 14 dans la mortaise 15 et en figure 9, on représente l'état en vigueur lors de la pénétration, partant lors de la déformation élastique du tenon 14 et du moyen de verrouillage 19 et de la partie d'arête 18B de la paroi latérale 4 autour de la mortaise 15.

En figure 7, on représente l'état en vigueur après l'accouplement et après le verrouillage. On a fait passer la mortaise 15 par-dessus la surface de guidage 20 et par-dessus la surface de verrouillage 21. La partie d'arête 18B de la paroi latérale 4 se trouve contre la paroi latérale 5 et la surface de verrouillage 21 du tenon 14 se trouve contre le bord autour de la mortaise 15 dans la partie d'arête 18, si bien que le moyen de verrouillage 19 vient s'appliquer derrière la partie d'arête 18B à la manière d'un crochet.

Via les moyens de verrouillage 19, on obtient une liaison des parois latérales amovibles 3 et 5 avec les parties restantes du boîtier à encastrer remarquablement plus résistante que celle que l'on obtient avec uniquement les moyens d'accouplement 13.

Toutefois, à l'aide d'une force relativement intense, de préférence manuelle, on peut néanmoins détacher chacune des parois latérales 3 et 5, ce qui permet de mettre le boîtier à encastrer sur le marché à l'état dans lequel les parois latérales 3 et 5 sont montées.

Il est clair que le boîtier à encastrer peut être mis en oeuvre dans toutes sortes d'application. Dans l'exemple représenté, on indique que, sur le boîtier à encastrer à l'état monté, on peut fixer par exemple une plaquette de recouvrement carrée 22 et un élément électrique, tel qu'un interrupteur 23, peut être fixé dans le boîtier à encastrer 1, comme représenté dans les figures 1 et 2.

Dans les parois des embranchements 12, on peut intégrer des moyens de verrouillage 24 formés par des lèvres élastiques pour le verrouillage de tuyaux flexibles. Dans les figures 1 et 10, un morceau de tuyau flexible 25 est verrouillé dans un embranchement 12 qui est représenté en détail.

Les moyens de verrouillage 19 sur les tenons 14, ainsi que les moyens de verrouillage 24 précités sont réalisés de préférence de telle sorte que les premiers cités soit plus résistants que les derniers cités, si bien que le tuyau 25 peut être retiré d'un embranchement 12 sans faire en sorte que les parois latérales 3, 5 se détachent du boîtier à encastrer 1 avec cet embranchement 12. Il est clair néanmoins que tel ne doit pas être nécessairement le cas et que l'inverse est également possible.

Il est évident que, lorsqu'on monte deux boîtiers à encastrer 1 en l'absence d'une paroi latérale amovible 3 ou 5, ou bien lorsqu'on a retiré de deux boîtiers à encastrer 1 à l'état complètement monté, respectivement une paroi latérale amovible 3 ou 5, ces deux boîtiers à encastrer 1 peuvent être fixés l'un à l'autre avec leurs côtés ouverts, les tenons 14 du premier boîtier à encastrer 1 pénétrant dans les mortaises 15 de l'autre et inversement. Les moyens de verrouillage 19 sur les tenons 15 sont également actifs.

Il n'est pas nécessaire de faire en sorte que les parois latérales 3 ou 5 soient complètement amovibles. Il peut également s'agir uniquement d'une partie amovible ; bien entendu, cette partie sera accouplée et verrouillée via des moyens d'accouplement 13 et via des moyens de verrouillage 19.

Les tenons 14 ne doivent pas nécessairement se présenter sous la forme de lèvres et les mortaises 15 ne doivent pas représenter nécessairement des fentes.

Les moyens de verrouillage 19 ne doivent pas nécessairement être appliqués sur les tenons 14 : ils peuvent en être séparés. Dans ce cas, ils prendront d'autres formes différentes de bourrelets.

Par l'expression parois latérales "séparées", on veut dire que ces dernières peuvent prendre une position qui est différente de leur position d'utilisation. Cela ne signifie pas que ces parois latérales doivent être complètement séparées des autres éléments constitutifs. C'est ainsi que par exemple ces parois latérales pourraient être reliées à l'origine via une partie apte à être arrachée et/ou via une charnière au reste du boîtier à encastrer, tandis qu'elles prennent malgré tout une position qui est différente de leur position d'utilisation normale.

L'invention n'est en aucune manière limitée à la forme de réalisation décrite ci-dessus et représentée dans les figures annexées ; au contraire, un boîtier à encastrer de ce type peut être réalisé conformément à différentes variantes sans sortir du cadre de l'invention tel que défini dans les revendications.

## Revendications

1. Boîtier à encastrer pour des éléments électriques, du type qui comprend une paroi dorsale (2) et une série de parois latérales (3 - 4 - 5 - 6), par lequel au moins une des parois latérales (3,5) ou une partie de cette dernière est réalisée sous la forme d'un élément séparé qui peut venir se fixer aux autres éléments constitutifs du boîtier à encastrer (1) et qui comprend des moyens de verrouillage (19) qui s'opposent à la séparation de la paroi latérale précitée (3, 5) ou de la partie précitée de cette dernière qui sont réalisées sous la forme d'éléments séparés, et sur lesquelles sont appliqués les éléments de verrouillage précités (19), sont munies d'entrées et/ou de sorties (7 ,8 ,9 ,10) pour des tubes, contre lesquelles sont également appliqués des embranchements (12), les entrées et/ou les sorties précitées (7 ,8 ,9 ,10) et plus spécifiquement les embranchements (12) étant munis de moyens de verrouillage (24) pour des tuyaux flexibles (25) **caractérisé en ce que** les moyens de verrouillage (19) pour les parois latérales précitées (3,5) sont munis d'un verrouillage plus résistant que les moyens de verrouillage (24) pour les tuyaux flexibles (25).

2. Boîtier à encastrer selon la revendication 1, **caractérisé en ce que** les moyens de verrouillage (19) sont réalisés de telle sorte que la paroi latérale (3, 5) qui est fixée via ces moyens de verrouillage (19), ou la partie précitée de cette dernière, reste amovible, de préférence en exerçant une force manuelle.

3. Boîtier à encastrer selon la revendication 1 ou 2, **caractérisé en ce que** les moyens de verrouillage (19) sont réalisés sous la forme d'un système d'encliquetage.

4. Boîtier à encastrer selon l'une quelconque des revendications précédentes, **caractérisé en ce que** les moyens de verrouillage (19) comprennent un ou plusieurs éléments en forme de crochets qui viennent s'appliquer, à l'état verrouillé, derrière un bord.

5. Boîtier à encastrer selon la revendication 4, **caractérisé en ce que** chaque élément en question en forme de crochet est réalisé sous la forme d'un bourrelet qui vient s'appliquer sur des éléments adaptés l'un à l'autre, de telle sorte que, lors du montage par déformation du bourrelet et/ou des parties avec lesquelles ce bourrelet coopère, on obtient un engrènement par crochets.

6. Boîtier à encastrer selon l'une quelconque des revendications précédentes, **caractérisé en ce que** les moyens de verrouillage (19) présentent une configuration, plus spécifiquement, possèdent une ou plusieurs surfaces de guidage (20) qui rendent le montage des parois latérales ou des parties de ces dernières plus facile que le déverrouillage.

7. Boîtier à encastrer selon la revendication 6, **caractérisé en ce que** les moyens de verrouillage (19) présentent au moins une partie (20) comprenant une légère inclinaison, de telle sorte que le montage des parois latérales ou de parties de ces dernières peut se dérouler facilement, et au moins une partie (21) comprenant une inclinaison plus forte permettant de s'opposer à un déverrouillage.

8. Boîtier à encastrer selon l'une quelconque des revendications précédentes, **caractérisé en ce que** la paroi latérale (3, 5) ou la partie de cette dernière, qui est réalisée sous la forme d'un élément séparé, peut être fixée via des moyens d'accouplement (13) aux autres éléments constitutifs (2, 4, 6) du boîtier à encastrer, et **en ce que** les moyens de verrouillage précités (19) sont combinés avec ces moyens d'accouplement (13), plus spécifiquement sont appliqués sur ces moyens d'accouplement (13).

9. Boîtier à encastrer selon la revendication 8, **caractérisé en ce que** les moyens d'accouplement précités (13) sont constitués par des liaisons du type à tenon et mortaise (14 - 15).

10. Boîtier à encastrer selon la revendication 9, **caractérisé en ce que** les parois latérales en question (3, 5) sont munies, à proximité d'un bord, de tenons (14) qui sont en mesure de coopérer avec des mortaises (15) pratiquées dans les autres éléments constitutifs (2, 4, 6) du boîtier à encastrer (1) tandis qu'elles sont munies, à proximité du bord opposé, de mortaises (15) qui sont en mesure de coopérer avec des tenons (14) qui sont appliqués sur les autres éléments constitutifs (2, 4, 6) du boîtier à encastrer (1).

11. Boîtier à encastrer selon l'une quelconque des revendications précédentes, **caractérisé en ce que** les moyens de verrouillage (19) sont réalisés en une seule pièce à partir d'une matière synthétique avec les éléments (14) du boîtier à encastrer (1), sur lesquels ils sont appliqués.

12. Boîtier à encastrer selon l'une quelconque des revendications précédentes, **caractérisé en ce qu'**il s'agit du type qui permet, lorsqu'on retire une paroi latérale (3, 5) de deux boîtiers à encastrer (1) de cette sorte, d'accoupler directement l'un à l'autre ces boîtiers à encastrer (1), les moyens de verrouillage précités (19) étant, le cas échéant, également actifs dans ce cas.

## Claims

1. Built-in fitting for electrical elements of the type having a rear wall (2) and a series of lateral walls (3 - 4 - 5 - 6) , whereby at least one of the lateral walls (3,5) or a part of the latter is realised as a separate element which can be fixed to the other components of the built-in fitting (1) and which comprises locking means (19) which counteract the separation of the above-mentioned lateral wall (3,5) or of the above-mentioned part of the latter, and which are realised as separate elements and on which the above-mentioned locking means (19) are applied, are provided with inputs and/or outputs (7,8,9,10) for tubing, on which are also applied branches (12), whereby the above-mentioned inputs and/or outputs (7,8,9,10) and more specifically the branches (12) are provided with locking means (24) for flexible tubes (25), **characterised in that** the locking means (19) for the above-mentioned lateral walls (3,5) are provided with a tighter lock than the locking means (24) for the flexible tubes (25).

2. Built-in fitting according to claim 1, **characterised in that** the locking means (19) are made such that the lateral wall (3,5) which is fixed by means of said locking means (19), or the above-mentioned part of the latter can still be moved, preferably by exerting a manual force.

3. Built-in fitting according to claim 1 or 2, **characterised in that** the locking means (19) are realised as a snap-in system.

4. Built-in fitting according to any one of the preceding claims, **characterised in that** the locking means (19) comprise one or several elements in the form of hooks which catch behind an edge when locked.

5. Built-in fitting according to claim 4, **characterised in that** every element concerned in the form of a hook is realised as a flange which is applied onto elements which are adapted to one another, such that during an assembly by means of deformation of the flange and/or of the parts with which the flange co-operates, the hooks will mesh.

6. Built-in fitting according to any one of the preceding claims, **characterised in that** the locking means (19) have such a configuration, more specifically have one or several guiding surfaces (20) which make it easier for the lateral walls or the parts of the latter to be mounted than to be unlocked.

7. Built-in fitting according to claim 6, **characterised in that** the locking means (19) have at least one part (20) with a slight inclination, such that the lateral walls or the parts of the latter can be easily mounted, and at least one part (21) with a stronger inclination which makes it possible to counteract any unlocking.

8. Built-in fitting according to any one of the preceding claims, **characterised in that** the lateral wall (3,5) or the part of the latter which is realised as a separate element can be fixed to the other components (2, 4, 6) of the built-in fitting by means of coupling means (13), and **in that** the above-mentioned locking means (19) are combined with said coupling means (13), more specifically are applied on said coupling means (13).

9. Built-in fitting according to claim 8, **characterised in that** the above-mentioned coupling means (13) are realised as joints of the tenon and mortise type (14-15).

10. Built-in fitting according to claim 9, **characterised in that** the lateral walls concerned (3, 5) are provided with tenons (14) near the edge which can co-operate with mortises (15) provided in the other components (2, 4, 6) of the built-in fitting (1) whereas they are provided with mortises (15) near the opposite edge which can co-operate with tenons (14) which are applied on the other components (2, 4, 6) of the built-in fitting (1).

11. Built-in fitting according to any one of the preceding claims, **characterised in that** the locking means (19) are made in one piece out of a synthetic material with the elements (14) of the built-in fitting (1) on which they are applied.

12. Built-in fitting according to any one of the preceding claims, **characterised in that** it is of a type which makes it possible, when a lateral wall (3, 5) of two such built-in fittings (1) is removed, to directly couple the built-in fittings (1) to one another, whereby the above-mentioned locking means (19) are also active in this case.

## Patentansprüche

1. Einbaugehäuse für elektrische Teile in der Ausführung, die eine Rückwand (2) sowie eine Reihe von Seitenwänden (3 - 4 - 5 - 6) umfasst, durch die mindestens eine der Seitenwände (3, 5) oder einen Teil derselben in Form eines getrennten Teils ausgeführt ist, das sich mit den übrigen Bestandteilen des Einbaugehäuses (1) verbindet, und das Verriegelungsmittel (19) hat, die sich dem Heraustrennen der obenerwähnten Seitenwand (3, 5) oder dem obenerwähnten Teil derselben widersetzen und die in der Form getrennter Teile ausgeführt sind, auf die die vorher erwähnten Verriegelungsmittel (19) angelegt werden, wobei Die Seitenwände mit Ein- und Ausgängen (7, 8, 9, 10) für Rohre versehen sind, worauf ebenfalls Abzweigungen (12) und die vorher erwähnten Ein- und/oder Ausgänge (7, 8, 9, 10) aufgebracht sind und mehr spezifisch Abzweigungen (12) mit Verriegelungsmitteln (24) für biegsame Rohrleitungen (25) versehen, wobei die Verriegelungsmittel (19) für die erwähnten Seitenwände (3, 5) mit einem widerstandsfähigeren Verriegelung als die Verriegelungsmittel (24) für die biegsamen Rohre (25) ausgestattet sind.

2. Einbaugehäuse nach Anspruch 1, **dadurch kennzeichnet, dass** die Mittel zum Verschließen (19) solchermaßen entworfen sind, dass die Seitenwand (3, 5), die mit diesen Verriegelungsmitteln (19) befestigt ist, oder der vorher erwähnte Teil derselben unbeweglich bleiben, vorzugsweise indem Kraft mit der Hand ausgeübt wird.

3. Einbaugehäuse nach Anspruch 1 oder 2, **dadurch kennzeichnet, dass** die Verriegelungsmittel (19) in Form eines Sperrklinkenmechanismus ausgeführt sind.

4. Einbaugehäuse nach einen oder anderen vorhergehenden Anspruch, **dadurch kennzeichnet, dass** die Verriegelungsmittel (19) ein Teil oder mehrere Teile in der Form von Haken umfassen, die im verschlossenen Zustand hinter einem Rand einrasten.

5. Einbaugehäuse nach Anspruch 4, **dadurch kennzeichnet, dass** jedes Teil in Hakenform in Form eines Wulstes ausgeführt ist, der sich auf passende Teile legt, so dass bei der Montage durch Verformung des Wulstes und/oder der Teile, mit denen der Wulst zusammenwirkt, eine Verzahnung mit Haken erreicht wird.

6. Einbaugehäuse nach einen oder anderen vorhergehenden Anspruch, **dadurch kennzeichnet, dass** die Verriegelungsmittel (19) eine Konfiguration, genauer eine Führungsfläche oder mehrere Führungsflächen (20), aufweisen, welche die Montage der Seitenwände oder von Teilen der Seitenwände leichter als die Entriegelung gestalten.

7. Einbaugehäuse nach Anspruch 6, **dadurch kennzeichnet, dass** die Verriegelungsmittel (19) mindestens einen Abschnitt (20) aufweisen, der eine leichte Neigung besitzt, so dass die Montage der Seitenwände oder von Teilen der Seitenwände leicht erfolgt, und mindestens einen Abschnitt (21) mit einer stärkeren Neigung aufweist, welcher sich einer Entriegelung entgegenstellt.

8. Einbaugehäuse nach einen oder anderen vorhergehenden Anspruch, **dadurch kennzeichnet, dass** die Seitenwand (3, 5) oder derjenige Teil derselben, welches in der Form eines getrennten Teils ausgeführt ist, sich mit Kupplungsvorrichtungen (13) an andere Bestandteile (2, 4, 6) des Einbaugehäuses befestigen lässt, und zwar solchermaßen, dass die vorher erwähnten Verriegelungsmittel (19) mit diesen Kupplungsvorrichtungen (13) verbunden, genauer auf diesen Kupplungsvorrichtungen (13) aufliegen.

9. Einbaugehäuse nach Anspruch 8, **dadurch kennzeichnet, dass** die obenerwähnten Kupplungsvorrichtungen (13) aus Nut-und-FederVerbindungen (14-15) bestehen.

10. Einbaugehäuse nach Anspruch 9, **dadurch kennzeichnet, dass** die betreffenden Seitenwänden (3, 5) in der Nähe des Randes mit Zapfen (14) versehen sind, die mit den Nuten (15), die in die anderen Teile (2, 4, 6) des Einbaugehäuses (1) eingelassen sind, zusammenwirken, während sie in der Nähe des gegenüberliegenden Randes mit Nuten (15) versehen sind, die mit Zapfen (14) zusammenwirken, die in die übrigen Bestandteile (2, 4, 6) des Einbaugehäuses (1) eingelassen sind.

11. Einbaugehäuse nach einen oder anderen vorhergehenden Anspruch, **dadurch kennzeichnet, dass** die Verriegelungsmittel (19) aus einem Stück aus Kunststoff mit den Teilen (14) des Einbaugehäuses (1), an denen sie angebracht sind, hergestellt sind.

12. Einbaugehäuse nach einen oder anderen vorhergehenden Anspruch, **dadurch kennzeichnet, dass** es sich um denjenigen Typ handelt, der beim Abnehmen der Seitenwand (3, 5) der beiden Einbaugehäuse (1) die direkte Verbindung eines Einbaugehäuses mit dem anderen (1) ermöglicht, wobei die obenerwähnten Verriegelungsmittel (19) in dem Fall ebenfalls wirken.
